# NEUE EUROPÄISCHE PATENTSCHRIFT

(11) **EP 2 069 690 B2**
(45) Veröffentlichungstag und Bekanntmachung des Hinweises auf die Entscheidung über den Einspruch: **15.11.2017**
(45) Hinweis auf die Patenterteilung: 02.06.2010
(21) Anmeldenummer: 07817616.1
(22) Anmeldetag: 04.10.2007
(51) Int. Cl.: F24C 7/08

(54) **GARGERÄT UND VERFAHREN ZUM EINSTELLEN SOLCH EINES GARGERÄTS**
COOKING APPLIANCE AND METHOD FOR SETTING A COOKING APPLIANCE OF THIS TYPE
APPAREIL DE CUISSON ET PROCEDE POUR REGLER UN TEL APPAREIL DE CUISSON

(30) Priorität: 06.10.2006 DE 102006047813
(43) Veröffentlichungstag der Anmeldung: 17.06.2009
(73) Patentinhaber: Lechmetall Landsberg Gmbh Edelstahlerzeugnisse, 86899 Landsberg a. Lech (DE)
(72) Erfinder: BREUNIG, Manfred, 86956 Schongau (DE); GREINER, Michael, 86899 Landsberg (DE)
(74) Vertreter: Weber-Bruls, Dorothée
(86) Internationale Anmeldenummer: PCT/DE2007/001774
(87) Internationale Veröffentlichungsnummer: WO 2008/040334

(56) Entgegenhaltungen:
- EP-A- 0 971 173
- EP-A- 1 758 000
- DE-A1- 10 024 368
- DE-A1- 10 117 292
- DE-A1-102004 013 553
- JP-A- 2005 195 272
- US-A- 5 832 446
- US-A- 5 899 502
- US-A1- 2006 112 833

## Beschreibung

Die vorliegende Erfindung betrifft ein Gargerät nach dem Oberbegriff von Anspruch 1.

Aus der EP 0 971 173 A1 ist ein Gargerät bekannt, bei dem eine Landesprogrammliste auf einer Anzeige angezeigt wird, und zwar jeweils in einer landesspezifischen Reihenfolge von Steuerprogrammen bzw. Steuerprogrammdeskriptoren. Dadurch kann den landesspezifisch unterschiedlichen Koch- und Ernährungsgewohnheiten Rechnung getragen werden. Für jede Landessprache und damit entsprechend für jedes Land, in dem das Gargerät zum Einsatz kommen kann, können beispielsweise die Kochrezepte in der Reihenfolge angeordnet werden, die der landesdurchschnittlichen Verwendungshäufigkeit entspricht. D.h. beispielsweise, daß in Deutschland die Zubereitung eines Schweinebratens häufiger auftritt als in der Türkei, und deshalb das Kochrezept für den Schweinebraten in der deutschen Landesprogrammliste an wesentlich früherer Stelle erscheint als in der entsprechenden türkischen Liste. Dadurch ist die Auswahl der Kochrezepte durch eine Bedienperson beschleunigt, weil beim Start der Programmautomatik das zuerst angezeigte Kochrezept der Landesprogrammliste das in diesem Land am häufigsten Verwendete ist. Durch weiteres Betätigen einer Eingabeeinheit gelangt dann eine Bedienperson mit zunehmender Dauer zu Rezepten, deren Verwendungshäufigkeit in dem jeweiligen Land geringer ist. Dies erleichtert zwar die Bedienbarkeit an sich, ist jedoch insbesondere für Restaurantketten noch nicht zufriedenstellend.

Aus der nicht vorveröffentlichten EP 1 758 000 A1 ist eine elektronische Steuervorrichtung für einen Haushaltsofen mit einer Speichereinheit bekannt, in der Garprogramme für eine Vielzahl von Speisen gespeichert ist. In Abhängigkeit der Sprache oder der Region des Aufstellungsortes des Ofens wird eine ausgewählte Teilmenge der verfügbaren Garprogramme gemäß den sprachlichen oder regionsspezifischen Bedürfnissen am Aufstellungsort zur Auswahl durch einen Benutzer bereitgestellt.

Aus der DE 101 17 292 A1 ist ein programmgesteuertes Haushaltsgerät mit einem Vorrat von landesspezifischen Programmfolgen, die in einem Speicher des Gerätes hinterlegt sind, bekannt. Durch die Auswahl der Anzeigensprache des Gerätes durch einen Anwender wird ein zugeordneter Satz von landesspezifischen Programmen zur Auswahl durch den Anwend er zur Verfügung gestellt.

Die US 6,236,974 B1 offenbart ein computerbasiertes System zur Haushaltsplanung, welches anhand von Informationen über persönlichen Vorlieben der Haushaltsmitglieder ausgewählte Menüvorschläge anzeigt.

In der DE 94 00 564 U1 ist ein Gargerät mit einer elektronischen Steuereinheit und einer Leseeinrichtung offenbart. In einen internen Speicher des Gargerätes können Garprogramme gespeichert werden. Das nachträgliche Aufspielen von weiteren Garprogrammen in den internen Speicher wird durch einen in die Leseeinrichtung einsteckbaren Datenträger ermöglicht und soll so jahreszeitliche Schwankungen berücksichtigen, so daß ein und dasselbe Gerät bspw. Zur Weihnachtszeit zur Herstellung von Weihnachtsmännern und zu Ostern zur Herstellung von Osterhasen und dergleichen verwendet werden kann.

Ferner ist in der US 5,808,278 A eine Haushaltsgerätesteuerung beschrieben, welche an einem Sabbat automatisch solche Bedien- und Anzeigenelemente eines Haushaltsgerätes deaktiviert, die nicht mit jüdisch-orthodoxen Maßgaben übereinstimmen. Tatsächlich soll damit verhindert werden, daß ein Ofen zum Garen von Gargut während eines Sabbats verwendet werden kann.

Die JP 2005 195272 A offenbart ein Gargerät, das ein Menü gemäß Umgebungsbedingungen des Gargeräts anzeigt.

Aufgabe der vorliegenden Erfindung ist es daher, das erfindungsgemäße Gargerät derart weiterzuentwickeln, daß es insbesondere für Bedienpersonal von Restaurantketten schnell, einfach und fehlerfrei bedienbar ist.

Diese Aufgabe wird erfindungsgemäß durch das Kennzeichen von Anspruch 1 gelöst. Bevorzugte erfindungsgemäße Gargeräte sind in den Ansprüchen 2 bis 13 beschrieben. In den Ansprüchen 14 bis 16 sind bevorzugte erfindungsgemäße Verfahren zum Einstellen eines erfindungsgemäßen Gargeräts beschrieben.

Es ist mit der Erfindung auch vorgesehen, daß die Reihenfolge und/oder Anordnung der vorausgewählten Programme auf einer Anzeigeeinrichtung durch die Verwendungshäufigkeit derselben bestimmt wird bzw. werden, wobei die Verwendungshäufigkeit vorzugsweise während des Betriebs des Gargeräts aktualisiert und/oder in Abhängigkeit von Erfahrungswerten, insbesondere in Bezug auf den ersten, zweiten und/oder dritten Parameter, vorzugsweise den ersten und/oderzweiten und/oderdritten und vierten und/oder fünften und/oder sechsten Parameter, festgelegt wird.

Die Erfindung liefert also eine Reduzierung der Schritte zur Auswahl eines Programms, indem nämlich beispielsweise in Abhängigkeit von einer Tageszeit von einer Restaurantkette speziell vorausgewählte Garprogramme auf einer Anzeigeeinrichtung eines Gargeräts, sortiert nach Verwendungshäufigkeit, unmittelbar nach Einschalten des Gargeräts automatisch aufscheinen. Durch diese Verknüpfung von insbesondere im Gargerät hinterlegten Tageszeiten und Zeitspannen werden somit automatisch die in diesen Zeitspannen von Kunden besagter Restaurantkette am häufigsten angefragten Garprogramme, zum Beispiel mittels Piktogrammsymbolen, auf einer obersten Bedienebene der Anzeigeeinrichtung Bedienpersonal angeboten. Beispielsweise kann von 6:00 Uhr bis 10:00 Uhr an Werktagen mit den erfindungsgemäßen Gargeräten lediglich ein typisches Frühstück zubereitet werden. Die genauen Angaben der Zeiten und Zeitspannen können von der Restaurantkette vorgegeben werden, so daß die Kunden ihre gewohnten Speisen unabhängig vom Bedienpersonal erhalten.

Das erfindungsgemäße Gargerät kann flexibel an die jeweiligen Wünsche des Gargerätebetreibers, insbesondere einer Restaurantkette, angepaßt werden, wie beispielsweise durch Aufnahme spezieller Speisen einer Saison, einer Region und dergleichen in die vorausgewählten Programme.

Weitere Merkmale und Vorteile der Erfindung ergeben sich aus der nachfolgenden Beschreibung, in der zwei Ausführungsbeispiele der Erfindung anhand schematischer Zeichnungen erläutert sind. Dabei zeigt:
- Fig. 1: ein Touchscreen eines ersten erfindungsgemäßen Gargeräts mit einer ersten Programmvorauswahl;und
- Fig. 2: ein Touchscreen eines zweiten erfindungsgemäßen Gargeräts von Figur 1 mit einer zweiten Programmvorauswahl.

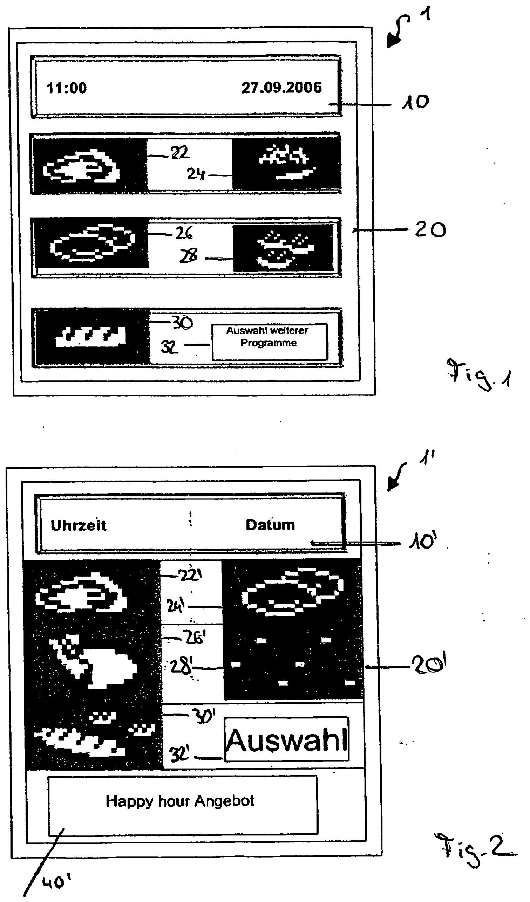

Ein erfindungsgemäßes Gargerät umfaßt ein Touchscreen 1, welches gleichzeitig die Funktion einer Anzeigeeinrichtung sowie einer Bedieneinrichtung übernimmt und in Figur 1 dargestellt ist. Das Touchscreen 1 wird von einer nicht gezeigten Steuereinrichtung des Gargeräts angesteuert, und zwar derart, daß zu bestimmten Tageszeiten an bestimmten Tagen bestimmte Garprogramme vorausgewählt auf dem Touchscreen 1 erscheinen. Genauer gesagt umfaßt das Touchscreen 1 eine Zeit- und Datumsanzeige 10, der ein erster Parameter in Form einer Tageszeit, hier 11:00 Uhr, und ein zweiter Parameter in Form eines Tages, hier 27. September 2006, entnehmbar ist, und ein Produkttastenfeld 20. Auf dem Produkttastenfeld 20 erscheinen unmittelbar nach Einschalten des Gargeräts und Erfassen der Uhrzeit und des Tages sechs vorausgewählte Garprogramme, nämlich im Bereich von sechs Produkttasten 22 bis 32, hier "Großbraten" auf der Produkttaste 22, "Beilagen" auf der Produkttaste 24, "Spiegelei" auf der Produkttaste 26, "Frikadellen" auf der Produkttaste 28, "Brot" auf der Produkttaste 30 und ein vom jeweiligen Betreiber des Gargeräts noch frei wählbares Programm auf der Produkttaste 32.

Bei dem Touchscreen 1' der Figur 2 ist nicht nur eine Zeit- und Datenanzeige 1 0' für eine Uhrzeit und ein Datum und ein Produkttastenfeld 20', sondern auch eine Anzeige 40' eines Namens einer Zeitspanne vorgesehen, hier "HappyHour Angebot". Über das Produkttastenfeld 20' sind nicht nur Garprogramme anwählbar, nämlich über eine Produkttaste 22' "Großbraten", eine Produkttaste 24' "Spiegelei", eine Produkttaste 26' "Hähnchen", eine Produkttaste 28' "Mais" und eine Produkttaste 30' "Baguette", sondern kann auch in eine zweite Bedienmenüebene durch Betätigen der Produktwahltaste 32' gewechselt werden kann, in der weitere Garprogramme, sortiert nach Verwendungshäufigkeit, (nicht gezeigt) aufgelistet sind.

Die in der voranstehenden Beschreibung, in den Zeichnungen sowie in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

### Bezugzeichenliste

- 1, 1': Touchscreen
- 10, 10': Zeit- und Datumsanzeige
- 20. 20': Produkttastenfeld
- 22 bis 32: Produkttaste
- 22' bis 30': Produkttaste
- 32': Produktwahltaste
- 40': Anzeige eines Namens einer Zeitspanne

## Patentansprüche

1. Gargerät, bei dem eine Vielzahl von Programmen in Abhängigkeit von zumindest einem Parameter vorauswählbar ist, wobei
auf zumindest einer Anzeigeeinrichtung (1, 1 ') nach Einschalten des Gargeräts die über den Parameter vorausgewählte Vielzahl der Programme automatisch anzeigbar ist, und über zumindest eine Bedieneinrichtung eines dieser angezeigten Programme anwählbar ist, **dadurch**
**gekennzeichnet, dass**
eine Auswahleinrichtung zum Auswählen eines ersten, zweiten und/oder dritten Parameters in Wirkverbindung mit einer Steuer- oder Regeleinrichtung von dem Gargerät umfasst ist,
so dass der Parameter der erste Parameter, der durch die Uhrzeit am Aufstellungsort des Gargeräts bestimmt ist, und/oder der zweite Parameter, der durch den Tag am Aufstellungsort des Gargeräts bestimmt ist, und/oder der dritte Parameter, der durch die Saison am Aufstellungsort des Gargeräts bestimmt ist, ist,
die vorausgewählten Programme am Aufstellungsort automatisch aus den abgespeicherten Programmen vorausgewählt sind, und
die Reihenfolge und/oder Anordnung der vorausgewählten Programme auf der Anzeigeeinrichtung durch die Verwendungshäufigkeit derselben bestimmt ist.

2. Gargerät nach Anspruch 1, **gekennzeichnet dadurch, dass**
die Programme Garprogramme und/oder Reinigungsprogramme sind, und/oder
der erste Parameter durch die Tageszeit am Aufstellungsort des Gargeräts bestimmt ist, und/oder
der Tag am Aufstellungsort des Gargeräts ausgewählt ist aus Werktag oder Feiertag, und/oder
die Saison ausgewählt ist durch die Jahreszeit und/oder das Wetter.

3. Gargerät nach Anspruch 1 oder 2, **dadurch gekennzeichnet, dass**
zumindest ein vierter Parameter durch die Region des Aufstellungsortes des Gargeräts bestimmt ist, und/oder
zumindest ein fünfter Parameter durch die, insbesondere geographische, Religion der am Aufstellungsort des Gargeräts zu bedienenden Kunden bestimmt ist, und/oder zumindest ein sechster Parameter durch die Sprache am Aufstellungsort des Gargeräts bestimmt ist.

4. Gargerät nach Anspruch 3, **dadurch gekennzeichnet, dass**
die Vielzahl der Programme auch in Abhängigkeit von dem vierten und/oder fünften und/oder sechsten Parameter vorauswählbar sind.

5. Gargerät nach Anspruch 4, **dadurch gekennzeichnet, dass**
die durchschnittliche Verwendungshäufigkeit von dem ersten und/oder zweiten und/oder dritten Parameter, vorzugsweise dem ersten und/oder zweiten und/oder dritten und vierten und/oder fünften und/oder sechsten Parameter, abhängt und/oder im Betrieb des Gargeräts aktualisierbar ist.

6. Gargerät nach Anspruch 5, **gekennzeichnet durch**
einen ersten Bereich (20, 20') der Anzeigeeinrichtung (1, 1'), in dem die vorausgewählten Programme angezeigt sind; und/oder
einen zweiten Bereich (10, 10', 40') der Anzeigeeinrichtung (1, 1'), in dem der erste und/oder zweite und/oder dritte Parameter, vorzugsweise der erste und/oder zweite und/oder dritte und vierte und/oder fünfte und/oder sechste Parameter, angezeigt ist bzw. sind; und/oder
einen dritten Bereich (32) der Anzeigeeinrichtung (1), in dem zumindest ein weiteres Programm angezeigt ist, das von einer Bedienperson vorauswählbar, einstellbar und/oder veränderbar ist.

7. Gargerät nach Anspruch 5 oder 6, **dadurch gekennzeichnet, dass**
über einen ersten Bereich (22 bis 32; 22' bis 30') der Bedieneinrichtung (1, 1') eines der angezeigten Programme anwählbar ist; und/oder
über einen zweiten Bereich der Bedieneinrichtung der erste und/oder zweite und/oder dritte Parameter, vorzugsweise der erste und/oder zweite und/oder dritte und vierte und/oder fünfte und/oder sechste Parameter, auswählbar und/oder veränderbar ist bzw. sind; und/oder
über einen dritten Bereich (32') der Bedieneinrichtung (1') in eine andere Bedienmenüebene wechselbar ist.

8. Gargerät nach einem der Ansprüche 5 bis 7, **dadurch gekennzeichnet, dass**
die Anzeigeeinrichtung und die Bedieneinrichtung zumindest teilweise von einem Touchscreen (1, 1') umfasst sind.

9. Gargerät nach einem der vorangehenden Ansprüche, **gekennzeichnet durch**
einen Zeitzähler, wie eine Uhr, und/oder
ein Ortungssystem, wie basierend auf GPRS, und/oder
zumindest einen Sensor, insbesondere zur Erfassung des Wetters am Aufstellungsort des Gargeräts, und/oder
die Auswahleinrichtung, die zum Auswählen des ersten und/oder zweiten und/oder dritten und vierten und/oder fünften und/oder sechsten Parameters vorgesehen ist, jeweils in Wirkverbindung mit der Steuer- oder Regeleinrichtung.

10. Gargerät nach einem der vorangehenden Ansprüche, **dadurch gekennzeichnet, dass**
die Steuer- oder Regeleinrichtung mit der Anzeigeeinrichtung und/oder der Bedieneinrichtung in Wirkverbindung steht.

11. Gargerät nach einem der vorangehenden Ansprüche, **gekennzeichnet durch**
zumindest eine Heizeinrichtung zum Heizen eines Garraums, zumindest eine Einrichtung zum Einführen von Feuchte in den Garraum, zumindest eine Einrichtung zum Abführen von Feuchte aus dem Garraum, zumindest eine Kühleinrichtung zum Kühlen des Garraums, zumindest eine Reinigungseinrichtung zum Reinigen des Garraums und/oder zumindest einen Sensor zum Erfassen zumindest einer charakteristischen Größe im Garraum, insbesondere jeweils in Wirkverbindung mit der Steuer- oder Regeleinrichtung.

12. Gargerät nach einem der vorangehenden Ansprüche, **gekennzeichnet durch**
zumindest eine erste Speichereinrichtung innerhalb des Gargeräts und/oder zumindest eine zweite Speichereinrichtung außerhalb des Gargeräts, insbesondere jeweils mit der Steuer- oder Regeleinrichtung in Wirkverbindung bringbar.

13. Gargerät nach einem der vorangehenden Ansprüche, **dadurch gekennzeichnet, dass**
das Gargerät mit zumindest einem Personal-Computer, dem Internet, einem Datenträger, wie in Form eines USB-Sticks, in Wirkverbindung bringbar ist, wobei vorzugsweise die zweite Speichereinrichtung umfasst ist von dem Personal-Computer und/oder dem Datenträger.

14. Verfahren zum Einstellen eines Gargeräts nach einem der vorangehenden Ansprüche,
**dadurch gekennzeichnet, dass**
die vorausgewählten Programme am Aufstellungsort automatisch aus abgespeicherten Programmen vorausgewählt werden, wobei vorzugsweise die vorausgewählten Programme manuell geändert und/oder ergänzt werden können, insbesondere nach Eingabe eines bestimmten ersten Zugangscodes.

15. Verfahren nach Anspruch 14, **dadurch gekennzeichnet, dass**
der erste und/oder zweite und/oder dritte Parameter, vorzugsweise der erste und/oder zweite und/oder dritte und vierte und/oder fünfte und/oder sechste Parameter, insbesondere nach Eingabe eines zweiten Zugangscodes, geändert werden kann bzw. können, wobei vorzugsweise der erste und der zweite Zugangscode gleich ausgewählt werden.

16. Verfahren nach Anspruch 14 oder 15, **dadurch gekennzeichnet, dass**
die Reihenfolge und/oder Anordnung der vorausgewählten Programme auf einer Anzeigeeinrichtung durch die Verwendungshäufigkeit derselben bestimmt wird bzw. werden, wobei die Verwendungshäufigkeit vorzugsweise während des Betriebs des Gargeräts aktualisiert und/oder in Abhängigkeit von Erfahrungswerten, insbesondere in Bezug auf den ersten, zweiten und/oder dritten Parameter, vorzugsweise den ersten und/oder zweiten und/oder dritten und vierten und/oder fünften und/oder sechsten Parameter, festgelegt wird.

## Claims

1. A cooking appliance in which a plurality of programs can be pre-selected in accordance with at least one parameter,
wherein the plurality of programs which have been pre-selected by means of said parameter can be displayed automatically on at least one display device (1, 1') once the cooking appliance has been switched on, and one of said programs which are displayed can be selected by means of at least one operating device, **characterized in that**
a selection device for selecting a first, second and/or third parameter is in effective connection with a control or regulation device of the cooking appliance, so that the parameter is the first parameter which is determined by the time of day in the place where the cooking appliance is installed, and/or the second parameter which is determined by the day in the place where the cooking appliance is installed, and/or
the third parameter which is determined by the season in the place where the cooking appliance is installed, the pre-selected programs are automatically pre-selected in the place of installation from among the stored programs, and
the order and/or arrangement of the pre-selected programs on the display device is/are determined by the frequency of use of said programs.

2. A cooking appliance according to claim 1, **characterized in that**
the programs are cooking programs and/or cleaning programs, and/or
the first parameter is determined by the time of day in the place where the cooking appliance is installed, and/or
the type of day in the place where the cooking appliance is installed is selected from among "working day" or "public holiday", and/or
the season is selected in accordance with the season of year and/or the weather.

3. A cooking appliance according to claim 1 or 2, **characterized in that**
at least one fourth parameter is determined by the region of the place where the cooking appliance is installed, and/or
at least one fifth parameter is determined by the religion, in particular based on geographic location, of the clients who will be served in the place where the cooking appliance is installed, and/or
at least one sixth parameter is determined by the language which is spoken in the place where the cooking appliance is installed.

4. A cooking appliance according to claim 3, **characterized in that**
the plurality of programs can also be pre-selected in accordance with the fourth and/or fifth and/or sixth parameter.

5. A cooking appliance according to claim 4, **characterized in that**
the average frequency of use, depends on the first and/or second and/or third parameter, preferably the first and/or second and/or third and fourth and/or fifth and/or sixth parameter, and/or can be updated during operation of the cooking appliance.

6. A cooking appliance according to claim 5, **characterized by**
a first area (20, 20') of the display device (1, 1') in which the pre-selected programs are displayed; and/or
a second area (10, 10', 40') of the display device (1, 1') in which the first and/or second and/or third parameter, preferably the first and/or second and/or third and fourth and/or fifth and/or sixth parameter, is/are displayed; and/or a third area (32) of the display device (1) in which at least one further program is displayed which can be pre-selected, adjusted and/or modified by an operator.

7. A cooking appliance according to claim 5 to 6, **characterized in that**
in a first area (22 to 32; 22' to 30') of the operating device (1, 1'), one of the programs which are displayed can be selected; and/or
in a second area of the operating device, the first and/or second and/or third parameter, preferably the first and/or second and/or third and fourth and/or fifth and/or sixth parameter, can be selected and/or changed; and/or
in a third area (32') of the operating device (1') another control menu level can be accessed.

8. A cooking appliance according to any one of claims 5 to 7, **characterized in that**
the display device and the operating device are at least partly comprised of a touch screen (1, 1').

9. A cooking appliance according to any one of the pre-ceding claims, **characterized by**
a time counter, such as a clock, and/or
a position determination system, such as based on GPRS, and/or
at least one sensor, in particular for sensing the weather in the place where the cooking appliance is installed, and/or
the selection device which is provided for selecting the first and/or second and/or third and fourth and/or fifth and/or sixth parameter,
each of which is in effective connection with the control or regulation device.

10. A cooking appliance according to any one of the preceding claims, **characterized in that**
the control or regulation device is in effective connection with the display device and/or the operating device.

11. A cooking appliance according to any one of the preceding claims, **characterized by**
at least one heating device for heating a cooking chamber, at least one device for introducing humidity in the cooking chamber, at least one device for removing humidity from the cooking chamber, at least one cooling device for cooling the cooking chamber, at least one cleaning device for cleaning the cooking chamber, and/or at least one sensor for sensing at least one characteristic value in the cooking chamber, in particular each of which is in effective connection with the control or regulation device.

12. A cooking appliance according to any one of the preceding claims, **characterized by**
at least one first storage device inside the cooking appliance and/or at least one second storage device outside the cooking appliance, in particular each of which can be brought in effective connection with the control or regulation device.

13. A cooking appliance according to any one of the preceding claims, **characterized in that**
the cooking appliance can be brought in effective connection with at least one personal computer, the Internet, a data carrier, such as in the form of a USB stick, wherein preferably the second storage device is comprised of said personal computer and/or data carrier.

14. A method for adjusting a cooking appliance according to any one of the preceding claims,
**characterized in that**
the pre-selected programs are automatically pre-selected in the place of installation from among stored programs, wherein the pre-selected programs can preferably be changed and/or supplemented manually, in particular once a particular first access code has been entered.

15. A method according to claim 14, **characterized in that**
the first and/or second and/or third parameter, preferably the first and/or second and/or third and fourth and/or fifth and/or sixth parameter, can be changed, in particular once a second access code has been entered, wherein preferably the first and the second access code are selected to be identical.

16. A method according to claim 14 or 15, **characterized in that**
the order and/or arrangement of the pre-selected programs on a display device is/are determined by the frequency of use of said programs, wherein the frequency of use is preferably updated during operation of the cooking appliance and/or is determined in accordance with empirical data, in particular relating to the first, second and/or third parameter, preferably the first and/or second and/or third and fourth and/or fifth and/or sixth parameter.

## Revendications

1. Appareil de cuisson, pour lequel une pluralité de programmes peuvent être présélectionnés en fonction d'au moins un paramètre, la pluralité de programmes présélectionnés par l'intermédiaire du paramètre pouvant être affichés de manière automatique sur au moins un dispositif d'affichage (1, 1') après mise sous tension de l'appareil de cuisson, et un de ces programmes affichés pouvant être choisi par l'intermédiaire d'au moins un dispositif de commande, **caractérisé en ce qu'**
un dispositif de sélection en liaison fonctionnelle avec un dispositif de commande ou de régulation est compris par l'appareil de cuisson pour la sélection d'un premier, deuxième et/ou troisième paramètres,
de telle sorte que le paramètre est le premier paramètre, qui est déterminé par l'heure de la journée du lieu d'installation de l'appareil de cuisson, et/ou le deuxième paramètre, qui est déterminé par le jour du lieu d'installation de l'appareil de cuisson, et/ou le troisième paramètre, qui est déterminé par la saison en cours sur le lieu d'installation de l'appareil de cuisson,
**en ce que** les programmes présélectionnés sur le lieu d'installation sont présélectionnés de manière automatique à partir des programmes mémorisés, et **en ce que** la succession et/ou l'ordre des programmes présélectionnés sur le dispositif d'affichage est/sont déterminé(es) grâce à leur fréquence d'utilisation.

2. Appareil de cuisson selon la revendication 1, **caractérisé en ce que**
les programmes sont des programmes de cuisson et/ou des programmes de nettoyage, et/ou le premier paramètre est déterminé par l'heure du lieu d'installation de l'appareil de cuisson, et/ou le jour du lieu d'installation de l'appareil de cuisson est sélectionné parmi un jour ouvré ou un jour férié, et/ou la saison est choisie grâce à la saison de l'année et/ou au temps qu'il fait.

3. Appareil de cuisson selon la revendication 1 ou 2, **caractérisé en ce que**
au moins un quatrième paramètre est déterminé par la région du lieu d'installation de l'appareil de cuisson, et/ou
au moins un cinquième paramètre est déterminé par la religion, en particulier de manière géographique, des clients à servir sur le lieu d'installation de l'appareil de cuisson, et/ou au moins un sixième paramètre est déterminé par la langue pratiquée sur le lieu d'installation de l'appareil de cuisson.

4. Appareil de cuisson selon la revendication 3, **caractérisé en ce que**
la pluralité des programmes peuvent aussi être présélectionnés en fonction du ou des quatrième et/ou cinquième et/ou sixième paramètre(s).

5. Appareil de cuisson selon la revendication 4, **caractérisé en ce que**
la fréquence moyenne d'utilisation dépend des premier et/ou deuxième et/ou troisième paramètre(s), de préférence des premier et/ou deuxième et/ou troisième et quatrième et/ou cinquième et/ou sixième paramètres, et/ou peut être actualisée pendant le fonctionnement de l'appareil de cuisson.

6. Appareil de cuisson selon la revendication 5, **caractérisé par**
un premier secteur (20, 20') du dispositif d'affichage (1, 1'), dans lequel les programmes présélectionnés sont affichés ; et/ou
un deuxième secteur (10, 10', 40') du dispositif d'affichage (1, 1'), dans lequel le ou les premier et/ou deuxième et/ou troisième paramètre(s), de préférence les premier et/ou deuxième et/ou troisième et quatrième et/ou cinquième et/ou sixième paramètre(s), est/sont affiché(s) ; et/ou
un troisième secteur (32) du dispositif d'affichage (1), dans lequel au moins un autre programme, qui peut être présélectionné, réglé et/ou modifié par un opérateur, est affiché.

7. Appareil de cuisson selon la revendication 5 ou 6, **caractérisé en ce qu'**
un des programmes affichés peut être choisi par l'intermédiaire d'un premier secteur (22 à 32 ; 22' à 30') du dispositif de commande (1, 1') ; et/ou
le ou les premier et/ou deuxième et/ou troisième paramètre(s), de préférence les premier et/ou deuxième et/ou troisième et quatrième et/ou cinquième et/ou sixième paramètre(s), peuvent être sélectionnés et/ou modifiés par l'intermédiaire d'un deuxième secteur du dispositif de commande ; et/ou un
passage à l'autre niveau de menu de commande pouvant être effectué par l'intermédiaire d'un troisième secteur (32') du dispositif de commande (1').

8. Appareil de cuisson selon l'une quelconque des revendications 5 à 7, **caractérisé en ce que**
le dispositif d'affichage et le dispositif de commande sont intégrés au moins partiellement dans un écran tactile (1, 1').

9. Appareil de cuisson selon l'une quelconque des revendications précédentes, **caractérisé par**
un compteur de temps, comme une horloge, et/ou
un système de localisation, comme ceux à base de GPRS, et/ou
au moins un capteur, en particulier pour la détection du temps qu'il fait sur le lieu d'installation de l'appareil de cuisson, et/ou
le dispositif de sélection, lequel est prévu pour la présélection des premier et/ou deuxième et/ou troisième et quatrième et/ou cinquième et/ou sixième paramètres,
respectivement en liaison fonctionnelle avec le dispositif de commande ou de régulation.

10. Appareil de cuisson selon une des revendications précédentes, **caractérisé en ce que**
le dispositif de commande ou de régulation est en liaison fonctionnelle avec le dispositif d'affichage et/ou le dispositif de commande.

11. Appareil de cuisson selon l'une quelconque des revendications précédentes, **caractérisé par**
au moins un dispositif de chauffage pour le chauffage d'un espace de cuisson, au moins un dispositif pour l'introduction d'humidité dans l'espace de cuisson, au moins un dispositif pour l'évacuation d'humidité hors de l'espace de cuisson, au moins un dispositif réfrigérant pour refroidir l'espace de cuisson, au moins un dispositif de nettoyage pour nettoyer l'espace de cuisson et/ou au moins un capteur pour détecter au moins une grandeur caractéristique de l'espace de cuisson, en particulier respectivement en liaison fonctionnelle avec le dispositif de commande ou régulation.

12. Appareil de cuisson selon l'une quelconque des revendications précédentes, **caractérisé par**
au moins un premier dispositif de mémorisation à l'intérieur de l'appareil de cuisson et/ou au moins un deuxième dispositif de mémorisation à l'extérieur de l'appareil de cuisson, pouvant en particulier être respectivement reliés fonctionnellement avec le dispositif de commande ou de régulation.

13. Appareil de cuisson selon l'une quelconque des revendications précédentes, **caractérisé en ce que** l'appareil de cuisson peut être relié fonctionnellement avec au moins un ordinateur personnel, l'Internet, un support de données, comme sous la forme d'une clé USB, le deuxième dispositif de mémorisation étant de préférence intégré dans l'ordinateur personnel et/ou le support de données.

14. Procédé de réglage d'un appareil de cuisson selon l'une quelconque des revendications précédentes,
**caractérisé en ce que**
le programme présélectionné est présélectionné sur le lieu d'installation de manière automatique à partir de programmes mémorisés, les programmes présélectionnés pouvant de préférence être modifiés et/ou complétés manuellement, en particulier après introduction d'un premier code d'accès déterminé.

15. Procédé selon la revendication 14, **caractérisé en ce que**
le ou les premier et/ou deuxième et/ou troisième paramètre(s), de préférence les premier et/ou deuxième et/ou troisième et quatrième et/ou cinquième et/ou sixième paramètres peuvent être modifiés, en particulier après introduction d'un deuxième code d'accès, les premier et deuxième codes d'accès étant de préférence sélectionnés de manière identique.

16. Procédé selon la revendication 14 ou 15, **caractérisé en ce que**
la succession et/ou l'ordre des programmes présélectionnés sur un dispositif d'affichage est/sont déterminé(es) grâce à leur fréquence d'utilisation, la fréquence d'utilisation étant actualisée de préférence pendant le fonctionnement de l'appareil de cuisson et/ou
étant définie en fonction de valeurs connues par l'expérience, en particulier en ce qui concerne le ou les premier, deuxième et/ou troisième paramètre(s), de préférence les premier et/ou deuxième et/ou troisième et quatrième et/ou cinquième et/ou sixième paramètres.
